# EUROPÄISCHE PATENTANMELDUNG

(11) **EP 1 777 450 A2**
(43) Veröffentlichungstag der Anmeldung: **25.04.2007**
(21) Anmeldenummer: 06025290.5
(22) Anmeldetag: 06.08.2005
(51) Int. Cl.: F16L 47/04, F16L 19/02, F16L 19/028

(54) **Überwurfmutter aus Kunststoff**

(30) Priorität: 14.08.2004 DE 102004039481; 03.12.2004 DE 102004058252
(62) Teilanmeldung aus: 05017173.5
(71) Anmelder: PROTECHNA S.A., 1701 Fribourg (CH)
(72) Erfinder:
(74) Vertreter: Pürckhauer, Rolf

(57) **Zusammenfassung**

Gegenstand der Erfindung ist eine Überwurfmutter aus Kunststoff zum Verschrauben von zwei Bauteilen.

Die Überwurfmutter weist zwei mittels einer Hakenverbindung und einer Clipverbindung zusammensetzbare Mutterhälften (44a, 44b) auf, wobei die erste Mutterhälfte (44a) ein hakenförmiges Ende (47) zum Einhaken in eine Durchstecköffnung (48) einer Aussparung (49) des Gewindesegments (50) in einem Ende (51) der zweiten Mutterhälfte (44b) aufweist und an das andere Ende (52) der ersten Mutterhälfte (44a) eine Rastzunge (53) mit einer Rastkante (54) angeformt ist. Beim Zusammensetzen der beiden Mutterhälften (44a, 44b) untergreift die Rastzunge (53) einen an das andere Ende (55) der zweiten Mutterhälfte (44b) angeformten Haltesteg (56) und verrastet mit der Rastkante (54) mit der Rückseite (57) des Haltesteges (56).

## Beschreibung

Die Erfindung betrifft eine Überwurfmutter aus Kunststoff, die aus zwei Mutterhälften auf einem ersten Bauteil zusammengesetzt und auf diesem unverlierbar gehalten wird, wobei die Mutterhälften ein Innengewindesegment und ein nach innen gerichtetes Ringschultersegment zum Angreifen an einem entsprechenden Bund des ersten mit einem zweiten Bauteil zu verschraubenden Bauteils aufweisen, insbesondere zum Anschrauben des Armaturengehäuses einer Entnahmearmatur an dem mit einem Außengewinde versehenen Auslaufstutzen eines Transport- und Lagerbehälters aus Kunststoff oder Metall für Flüssigkeiten und Schüttgut.

Aus der DE 103 01 517 B3 ist ein Transport- und Lagerbehälter für Flüssigkeiten mit einem auf einem palettenartigen Untergestell stehenden Innenbehälter aus Kunststoff und einem äußeren Gitterkorb bekannt. Die Entnahmearmatur des Innenbehälters wird mittels einer unverlierbar auf dem Einlaufstutzen der Armatur angeordneten Überwurfmutter aus Kunststoff der gattungsgemäßen Art, die aus zwei Mutterhälften auf dem Einlaufstutzen zusammengeschweißt wird, an den Auslaufstutzen des Innenbehälters angeschraubt. Bei einer Herstellung der Überwurfmutter aus Aluminium werden die beiden Mutterhälften auf dem Einlaufstutzen der Entnahmearmatur zusammengenietet. Eine derartige unverlierbare Anbringung einer Überwurfmutter auf dem Einlaufstutzen einer Entnahmearmatur ist umständlich und zeitaufwendig und führt zu einer Verteuerung der Herstellungskosten.

Die DE 43 22 032 C1 beschreibt eine Kabelverschraubung zum abgedichteten Verlegen von Rohren und Leitungen durch Gerätewände und dergleichen Bauteile, die aus einem Doppelnippel mit endseitigen Gewindestutzen und einem dazwischen angeordneten Polygonansatz für ein Werkzeug besteht, wobei der Nippel an seinem einen Ende einen innen umlaufenden Anschlagkragen aufweist, an welchem sich ein Dichtkörper abstützt, durch den ein Rohr oder eine Leitung durchgeschoben wird. Der Dichtkörper wird mittels einer auf das andere Ende des Nippels aufschraubbaren Überwurfmutter mit einem Anschlagkragen vorgespannt. Der Dichtkörper, der Dichtnippel und die Überwurfmutter bestehen jeweils aus zwei Hälften, so dass eine beschädigte Kabelverschraubung leicht auswechselbar ist. Die beiden Hälften der Überwurfmutter werden durch an beiden Enden der Mutterhälften angeordnete Rasthakenelemente zusammengehalten.

Der Erfindung liegt die Aufgabe zugrunde, die gattungsgemäße Überwurfmutter im Hinblick auf eine vereinfachte Montage weiterzuentwickeln.

Diese Aufgabe wird erfindungsgemäß gelöst durch eine Überwurfmutter mit den Merkmalen des Patentanspruchs.

Die erfindungsgemäße Überwurfmutter ist nachstehend anhand von Zeichnungsfiguren erläutert, die folgendes darstellen:
- Fig. 1: eine Längsschnittdarstellung eines Klappenhahns, der mittels einer in den Figuren 2 bis 4 im einzelnen dargestellten Überwurfmutter an den Auslaufstutzen eines Flüssigkeitsbehälters angeschraubt ist, die
- Fign. 2 und 3: perspektivische Darstellungen der getrennten sowie der zusammengesetzten Mutterhälften der zum Anschrauben des Klappenhahns nach Figur 1 verwendeten Überwurfmutter und
- Fig.4: einen Schnitt nach Linie IV-IV der Figur 3.

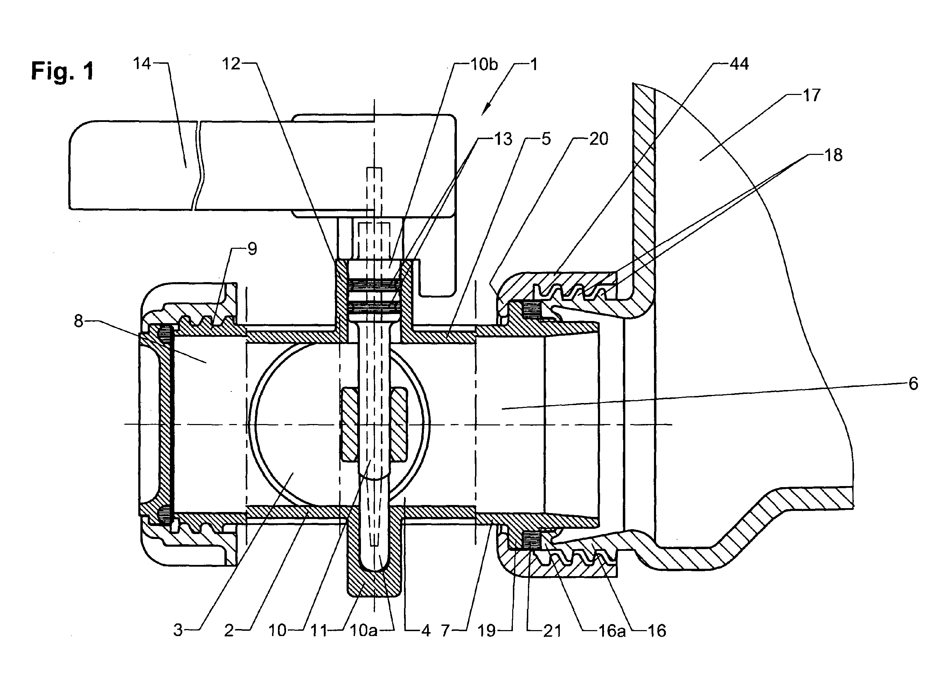

Das aus einem Polyethylen hoher Dichte (PE-HD) hergestellte Hahngehäuse 2 des Klappenhahns 1 nach Fig. 1 nimmt eine Klappenscheibe 3 zum Öffnen und Schließen der zentralen Durchflußöffnung 4 der Gehäusekammer 5 auf, die mit dem Einlaufkanal 6 des Einlaufstutzens 7 und dem Auslaufkanal 8 des Auslaufstutzens 9 des Hahngehäuses 2 in Verbindung steht. Die Klappenscheibe 3 ist exzentrisch an einer Drehwelle 10 befestigt, deren beide Enden 10a, 10b in Lagerstutzen 11, 12 des Hahngehäuses 2 drehbar gelagert sind, wobei das obere Ende 10b der Drehwelle 3 über den Lagerstutzen 12 aus dem Hahngehäuse 2 nach außen vorsteht. Die Drehwelle 10 ist mittels Dichtringen 13 in dem Lagerstutzen 12 nach außen abgedichtet. Auf dem aus dem Hahngehäuse 2 herausragenden Ende 10b der Drehwelle 10 der Klappenscheibe 3 ist ein Handgriff 14 zum Öffnen und Schließen des Klappenhahns 1 angebracht.

Der Klappenhahn 1 ist mittels einer Überwurfmutter 44 aus Kunststoff an dem Auslaufstutzen 16 eines Flüssigkeitsbehälters 17, z.B. eines Kunststoff-Innenbehälters eines Palettenbehälters, befestigt, wobei der Flüssigkeitsbehälter 17 mit dem mit einem Außengewinde 18 versehenen Auslaufstutzen 16 einteilig durch Blasformen hergestellt ist.

Die Überwurfmutter 44 ist zwischen einem Bund 19 des Einlaufstutzens 7 und den Lagerstutzen 11, 12 des Hahngehäuses 2 für die Drehwelle 10 der Klappenscheibe 3 unverlierbar und verschiebbar auf dem Einlaufstutzen des Hahngehäuses 2 gehalten.

Beim Einziehen des Einlaufstutzens 7 des Hahngehäuses 2 in den Auslaufstutzen 16 des Flüssigkeitsbehälters 17 durch das Aufschrauben der auf dem Einlaufstutzen 7 des Hahngehäuses 2 unverlierbar gehaltenen Überwurfmutter 44, die mit einer Ringschulter 20 an dem Bund 19 des Einlaufstutzens 7 angreift, auf dem Auslaufstutzen 16 wird ein auf dem Einlaufstutzen 7 sitzender Dichtring 21 zwischen dem Bund 19 und dem äußeren Ende 16a des Auslaufstutzens 16 des Flüssigkeitsbehälters 17 eingespannt und dadurch das Gehäuse 2 des Klappenhahns 1 gegen den Flüssigkeitsbehälter 17 abgedichtet.

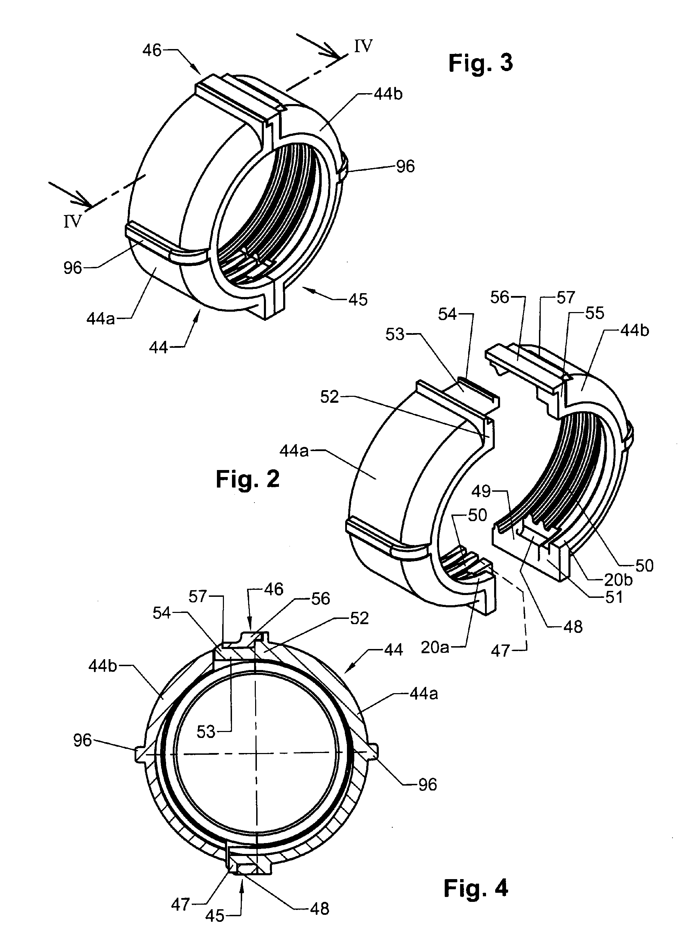

Die Überwurfmutter 44 nach den Figuren 2 bis 4 besteht aus zwei als Kunststoff-Spritzgußteile hergestellten Mutterhälften 44a, 44b mit einem Innengewindesegment 50 und einem nach innen gerichteten Ringschultersegment 20a, 20b. Die beiden Mutterhälften 44a, 44b werden mittels einer Hakenverbindung 45 und einer Clipverbindung 46 miteinander verbunden. Die erste Mutterhälfte 44a ist mit einem hakenförmigen Ende 47 zum Einhaken in eine Durchstecköffnung 48 einer Aussparung 49 des Innengewindesegments 50 im einen Ende 51 der zweiten Mutterhälfte 44b versehen und an das andere Ende 52 der ersten Mutterhälfte 44a ist eine Rastzunge 53 mit einer Rastkante 54 angeformt. Beim Zusammensetzen der beiden Mutterhälften 44a, 44b untergreift die Rastzunge 53 einen an das andere Ende 55 der zweiten Mutterhälfte 44b angeformten, abgestuften Haltesteg 56 und verrastet mit der Rastkante 54 mit der Rückseite 57 des Haltesteges 56.

Die Überwurfmutter 44 ist auf dem Umfang mit Greifrippen 96 als Montagehilfe versehen.

## Patentansprüche

1. Überwurfmutter (44) aus Kunststoff, die aus zwei Mutterhälften (44a, 44b) auf einem ersten Bauteil zusammengesetzt und auf diesem unverlierbar gehalten wird, wobei die Mutterhälften (44a, 44b) ein Innengewindesegment (50) und ein nach innen gerichtetes Ringschultersegment (20a, 20b) zum Angreifen an einem entsprechenden Bund (19) des ersten mit einem zweiten Bauteil zu verschraubenden Bauteils aufweisen, insbesondere zum Anschrauben des Armaturengehäuses (2) einer Entnahmearmatur (1) an dem mit einem Außengewinde (18) versehenden Auslaufstutzen (16) eines Transport- und Lagerbehälters (17) aus Kunststoff oder Metall für Flüssigkeiten und Schüttgut, **gekennzeichnet durch** zwei mittels einer Hakenverbindung (45) und einer Clipverbindung (46) zusammensetzbare Mutterhälften (44a, 44b), wobei die erste Mutterhälfte (44a) ein hakenförmiges Ende (47) zum Einhaken in eine Durchstecköffnung (48) einer Aussparung (49) des Gewindesegments (50) in einem Ende (51) der zweiten Mutterhälfte (44b) aufweist und an das andere Ende (52) der ersten Mutterhälfte (44a) eine Rastzunge (53) mit einer Rastkante (54) angeformt ist, wobei beim Zusammensetzen der beiden Mutterhälften (44a, 44b) die Rastzunge (53) einen an das andere Ende (55) der zweiten Mutterhälfte (44b) angeformten Haltesteg (56) untergreift und mit der Rastkante (54) mit der Rückseite (57) des Haltesteges (56)verrastet.
